# EUROPEAN PATENT SPECIFICATION

(11) **EP 2 222 059 B1**
(45) Date of publication and mention of the grant of the patent: **25.05.2011**
(21) Application number: 09153479.2
(22) Date of filing: 23.02.2009
(51) Int. Cl.: H04M 1/02

(54) **Handheld electronic device with rotatable member**
Tragbare elektronische Vorrichtung mit Drehelement
Dispositif électronique portable doté d'un élément rotatif

(43) Date of publication of application: 25.08.2010
(73) Proprietor: RESEARCH IN MOTION LIMITED, Waterloo, Ontario N2L 3W8 (CA)
(72) Inventor: Griffin, Jason, Kitchener Ontario N2L 3W8 (CA); Ladouceur, Norman M, Waterloo Ontario N2L 3W8 (CA)
(74) Representative: Moore, Barry

(56) References cited:
- EP-A2- 1 638 296
- WO-A1-2006/022383
- GB-A- 2 434 274
- US-A1- 2008 188 262
- US-B1- 7 212 846

## Description

Handheld electronic devices, such as smartphones, cellular telephones and personal digital assistants (PDAs) can provide a variety of different functions in a small package. For some functions, however, such as text entry for messaging and email it may be desirable to provide a specific type of interface, such as an alphabetic keypad, which typically would have a landscape orientation (as opposed to a portrait orientation). For other functions, however, it may be more convenient for the handheld electronic device to have a different orientation. For example, when holding a handheld electronic device during a telephone call it may be more convenient for the device to not exceed a selected width so that it is easily held by the user. Thus, opposing design goals (e.g. narrow width to facilitate holding, and relatively wide alphabetic keypad to facilitate text entry) may exist when developing such a multi-functional device.

As another consideration, it may be desirable for the handheld electronic device to have different interfaces that are particularly suited for specific tasks. Because of the limited real estate available on the surface of a handheld electronic device it may be difficult to provide a plurality of specialized interfaces that are dedicated to selected functions.

WO2006/022383 discloses a personal digital assistant (PDA) having two components connected by a connecting shaft. In one configuration of the PDA, the two components interface adjacently with a slanted flat surface at 45 degrees relative to the longitudinal axis of the PDA. The connecting shaft intersects perpendicularly with the slanted flat surface, in the middle of the slanted flat surface. A first position is illustrated in Figure 17a, and a second position, which is achieved by rotating a lower of the two components by 180 degrees relative to a higher of the two components, is illustrated in Figure 17b. In the first position, the two components together have a candy-bar form factor; in the second position, the two components together have an L-shaped form factor.

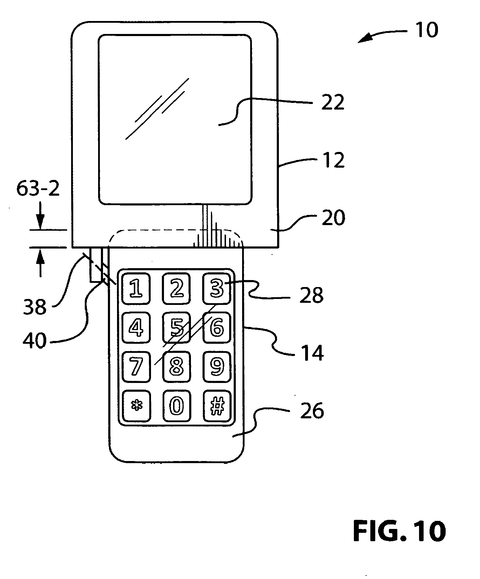

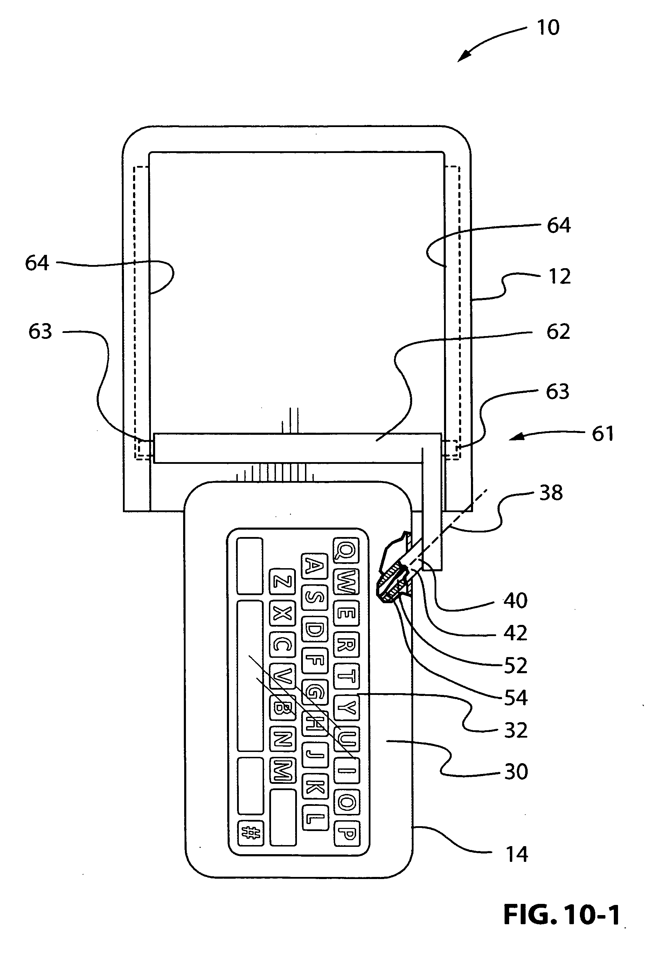

US 2008/188262 discloses a mobile telephone with a camera. The camera is permanently attached to at least a part of the keypad in a subcomponent of the casing, wherein the subcomponent within a chassis of the casing is designed in such a way that it can be swivelled about at least one axis relative to the display, and the chassis at least partly surrounds the subcomponent. Figure 10 illustrates a configuration in which the subcomponent is swivelable about an axis that runs diagonal to the longitudinal axis of the mobile telephone.

### GENERAL

Accordingly, a device in accordance with claim 1 is provided. Advantageous features are provided in the dependent claims.

### BRIEF DESCRIPTION OF THE DRAWINGS

Embodiments of the technology will now be described by way of example only with reference to the attached drawings, in which:

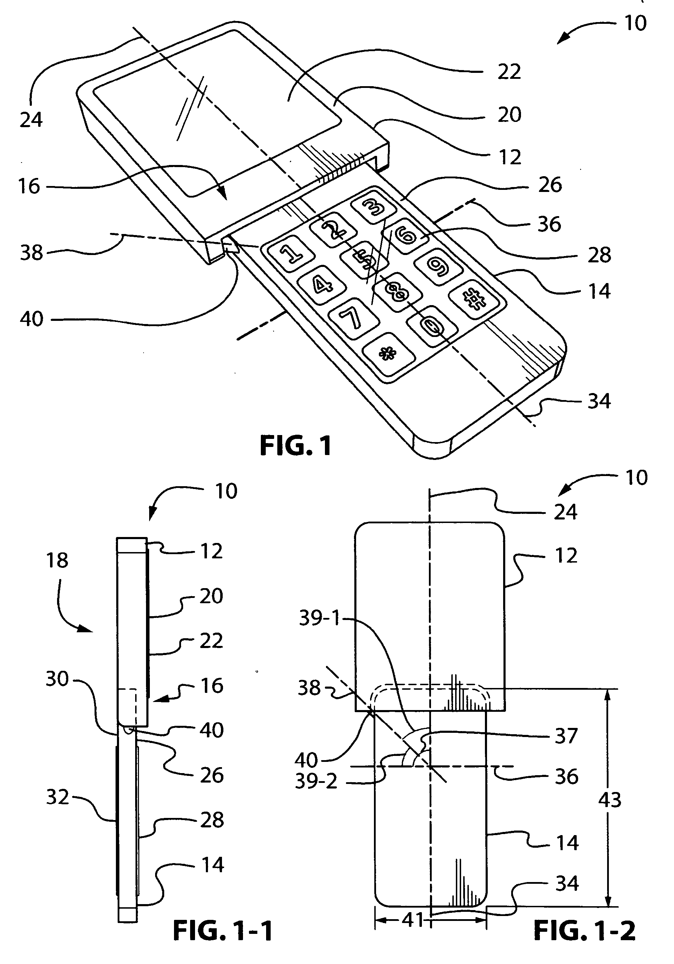

Figure 1 is a perspective view showing a first side of a handheld electronic device with a device member in a first position, in accordance with an embodiment of the technology;

Figure 1-1 is an elevation view of a side edge of the handheld electronic device shown in Figure 1, with the device member in the first position;

Figure 1-2 is an elevation view of the first side of the handheld electronic device shown in Figure 1, with the device member in the first position;

Figure 2 is a perspective view showing a second side of the handheld electronic device shown in Figure 1, with the device member in the first position;

Figure 3 is a perspective view of the handheld electronic device shown in Figure 1, with the device member in a second position;

Figure 4 is a perspective view showing the second side of the handheld electronic device shown in Figure 1, with the device member in the second position;

Figures 5-1 and 5-2 are perspective views of a variant of the handheld electronic device shown in Figure 1, with a device member in first and second positions respectively;

Figure 6 is an elevation view of a first side of another variant of the handheld electronic device shown in Figure 1, with a device member in the first position;

Figures 7-1 and 7-2 are elevation views of another variant of the handheld electronic device shown in Figure 1, with a device member in first and second positions respectively;

Figure 8 is a magnified elevation view of the handheld electronic device shown in Figure 1, showing the structure that permits the device member to move between the first and second positions;

Figure 9 is a schematic view of selected components that are part of the handheld electronic device shown in Figure 1;

Figure 10 is an elevation view of a first side of another variant of the handheld electronic device shown in Figure 1, in an open position, and with a device member in a first position;

Figure 10-1 is a magnified elevation view of a second side of the variant shown in Figure 10, in an open position, and with a device member in a first position;

Figure 11 is another elevation view of the first side of the variant shown in Figure 10, in a closed position;

Figure 12 is an elevation view of a first side of another variant of the handheld electronic device shown in Figure 1, in an open position, and with a device member in a first position;

Figure 12-1 is a magnified elevation view of a portion of the variant shown in Figure 12, in the open position and with the device member in the first position;

Figure 13 is another elevation view of the first side of the variant shown in Figure 12, in a closed position;

Figures 14 and 15 are elevation views of another variant of the handheld electronic device shown in Figure 1, with a device member in first and second positions respectively; and

Figure 16 is an elevation view of another variant of the handheld electronic device shown in Figure 1.

### DESCRIPTION OF PREFERRED EMBODIMENTS

Reference is made to Figure 1, which shows a handheld electronic device 10 in accordance with an embodiment of the technology. The handheld electronic device 10 may be any type of device, such as a smartphone, a cellular telephone, or a personal digital assistant (PDA).

The handheld electronic device 10 includes a first device member 12 and a second device member 14. The first and second device members 12 and 14 may, for example, be upper and lower device members respectively. Referring to Figure 1-1, the first and second device members 12 and 14 together define a first side 16 and a second side 18 of the handheld electronic device 10.

On the first side 16, the first device member 12 has a first face 20 on which there may be a first i/o element 22 (shown more clearly in Figure 1) or any combination of i/o elements. An i/o element is any element that can be used to input information into the handheld electronic device 10, output information from the handheld electronic device 10, or both. Examples of i/o elements that can be used to input information into the handheld electronic device 10, (i.e. input elements), include a keypad, such as a numeric, alphabetic or alphanumeric keypad, a thumbwheel, a trackpad, a trackball, a microphone, a camera, a joystick and a touchscreen. It will be noted that, for the purposes of this disclosure and the accompanying claims, an alphanumeric keypad is to be considered a type of alphabetic keypad. In other words, it is an alphabetic keypad that also contains numeric keys. It will also be noted that an alphabetic keypad may contain an individual key for each letter of the alphabet, however it is not necessary for it to. Some or all of the keys may contain more than one letter, an example of which is provided on the Blackberry® Pear™ smartphone sold by Research in Motion Limited of Waterloo, Ontario, Canada. Examples of i/o elements that can be used to output information from the handheld electronic device 10 (i.e. output elements) include a display and a speaker. An example of an i/o element that acts as both an input element and as an output element is a touch-screen. The first i/o element 22 may be any suitable type of i/o element, such as, for example, a display.

The first device member 12 may have a first device member axis, shown at 24, that divides the first device member 12 into left and right portions. In some embodiments, such as the embodiment shown in Figure 1, the first device member 12 may be symmetrical about the first device member axis 24.

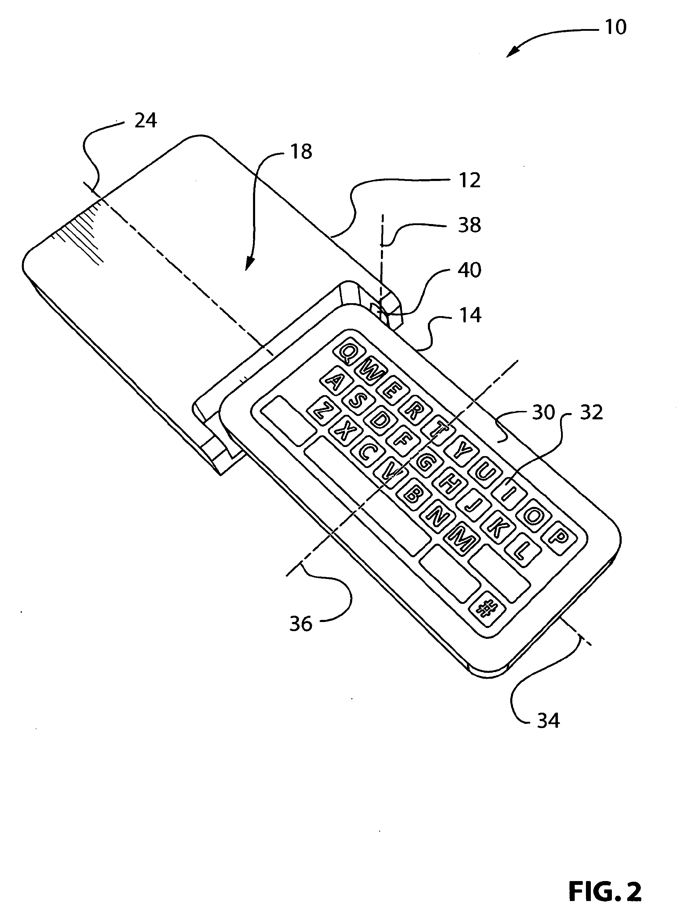

The second device member 14 has a first face 26 on which there may be a second i/o element 28, which is described further below, or any combination of i/o elements. As shown in Figures 1-1 and 2, the second device member 14 has a second face 30 on which there may be a third i/o element 32, which is described further below, or any combination of i/o elements.

The first face 26 of the second device member 14 has associated therewith a first face axis 34, which divides the first face 26 into left and right portions. In some embodiments, such as the embodiment shown in Figure 1, the first face 26 may be symmetrical about the first face axis 34. Referring to Figure 2, the second face 30 of the second device member 14 has associated therewith a second face axis 36 that divides the second face 30 into left and right portions. In some embodiments, such as the embodiment shown in Figure 2, the second face 30 may be symmetrical about the second device member axis 36.

As shown in Figure 1-2, the first and second face axes 34 and 36 are aparallel, (i.e. they are not parallel) and a face axis angle 37 exists between them. In the embodiment shown in Figures 1, 2, 3 and 4, the face axis angle 37 is 90 degrees (i.e. the first and second face axes 34 and 36 are perpendicular to each other). It is alternatively possible, however, that a different non-zero angle 37 be present between them.

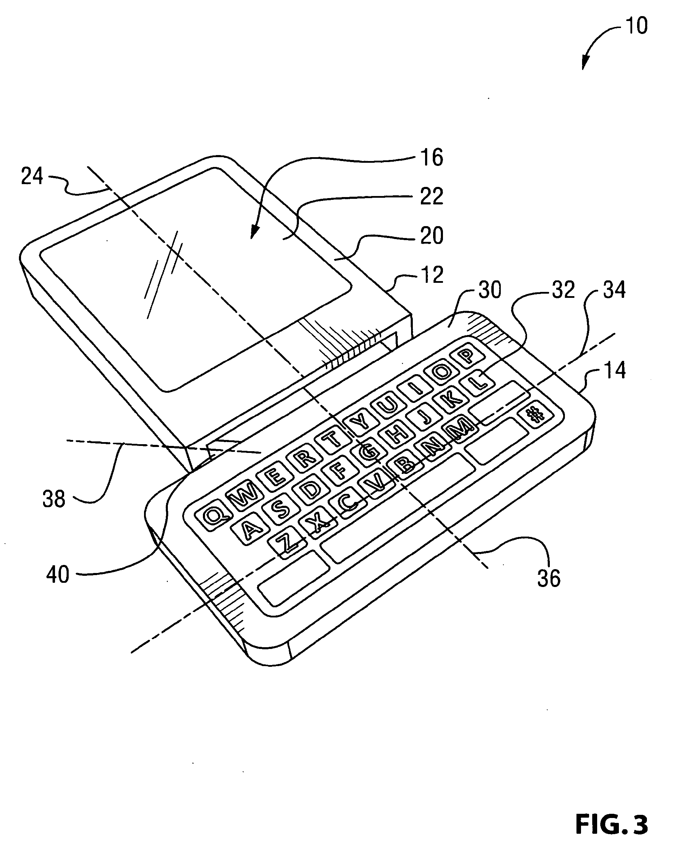

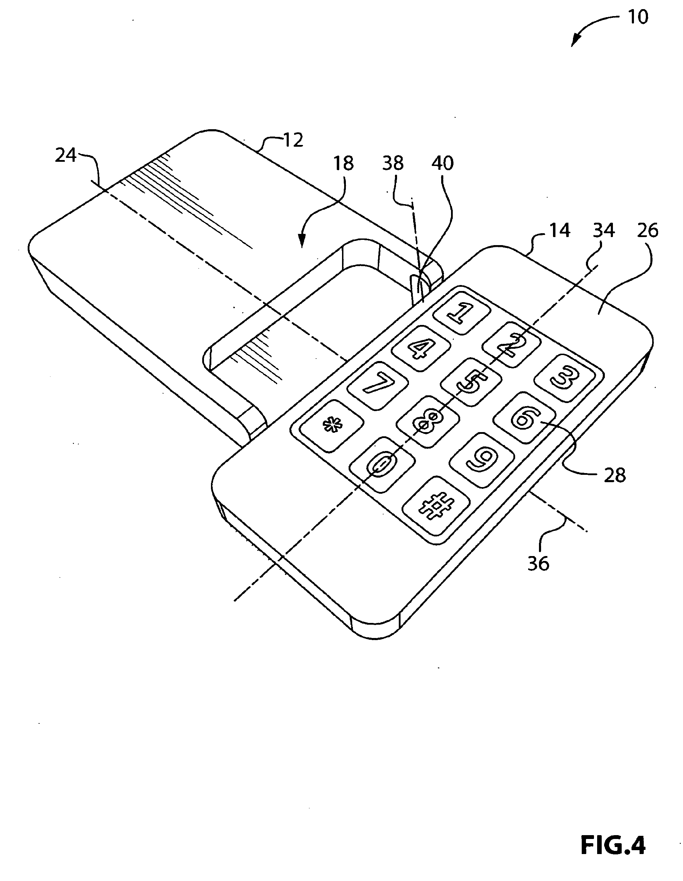

The second device member 14 is rotatable about a rotation axis 38 between a first position shown in Figures 1 and 2 and a second position shown in Figures 3 and 4. The rotation axis 38 may be positioned to be parallel to the first and second faces 26 and 30 of the second device member 14. As shown in Figure 1, in the first position the first face 26 of the second device member 14 is on the first side 16 of the handheld electronic device 10, and the second face 30 is on the second side 18. As shown in Figure 3, in the second position the second face 30 of the second device member 14 is on the first side 16 of the handheld electronic device 10. Optionally, the handheld electronic device 10 is configured to only accept input from whichever of the first and second faces 26 and 30 of the second device member 14 is on the first side 16 of the handheld electronic device 10.

Referring to Figure 1-2, the rotation axis 38 is positioned at a first rotation axis angle 39-1 relative to the first face axis 34 and a second rotation axis angle 39-2 relative to the second face axis 36. The first and second rotation axis angles 39-1 and 39-2 may be any suitable angles. For example they may both be 45 degrees. In embodiments wherein the face axis angle is 90 degrees and wherein the first and second rotation axis angles 39-1 and 39-2 are both 45 degrees, the second device member 14 is flipped by 180 degrees and undergoes a 90 degree change in its orientation when moving between the first and second positions.

With continued reference to Figure 1-2, the second device member 14 has an axial dimension 43 and a transverse dimension 41. In embodiments wherein the axial dimension 43 and transverse dimension 41 are not the same, as is the case in the embodiment shown in Figures 1, 2, 3 and 4, the first position (Figures 1 and 2) of the second device member 14 corresponds to a portrait orientation and the second position (Figures 3 and 4) corresponds to a landscape orientation.

Referring to Figure 1, certain types of i/o element are particularly suited for a portrait orientation. Similarly, certain types of i/o element are suited for a landscape orientation. Thus, the second i/o element 28, which is present on the first face 26 of the second device member 14, may be an i/o element that is suited to a portrait orientation, such as a telephone keypad. Analogously, the third i/o element 32 (Figure 3), which is present on the second face 30 of the second device member 14, may be an i/o element that is suited to a landscape orientation, such as an alphabetic keypad. Thus, the handheld electronic device 10 can, as shown in Figure 1, be configured to be used as a mobile phone that has a narrow shape so as to be comfortable to hold with one hand during use, and can, as shown in Figure 3, be configured to be used as a mobile email device and/or as a PDA that has an alphabetic keyboard with sufficiently wide keys to facilitate text entry.

Referring to Figure 1, instead of being a telephone keypad the second i/o element 28 could instead be another i/o element that is suited for a portrait orientation, such as, for example, a speech recorder control arrangement. Alternatively, the second i/o element 28 could be an i/o element that is not particularly suited for use in a portrait orientation, such as, for example, a camera.

Referring to Figure 3, instead of being an alphabetic keypad, the third i/o element 32 could instead be another i/o element that may be suited for a landscape orientation, such as, for example, certain types of video game control arrangement, or a trackpad for controlling a pointer particularly in embodiments wherein the first i/o element 22 is a display, and especially a display having a landscape orientation. Alternatively, the third i/o element 32 could be an i/o element that is not particularly suited for use in a landscape orientation, such as, for example, a camera.

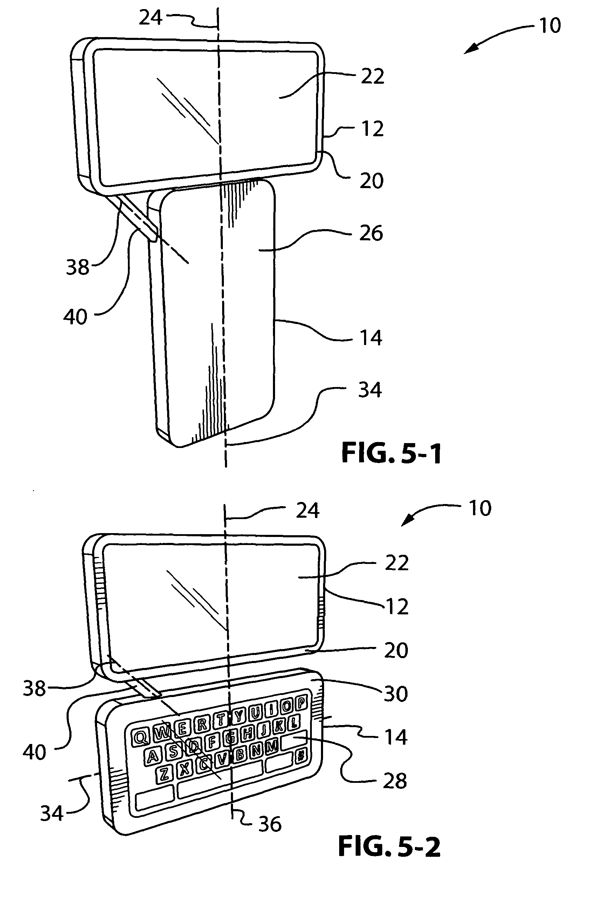

In the configuration shown in Figure 1, the first device member 12 has a portrait orientation. In an alternative embodiment, shown in Figures 5-1 and 5-2, the first device member 12 has a landscape orientation. As such, the first i/o element 22 may be one that is particularly suited for use in a landscape orientation, such as a display for displaying video output such as movies. In the exemplary embodiment shown in Figures 5-1 and 5-2, the second device member 14 has a portrait orientation in the first position (Figure 5-1) wherein it is less wide than the first device member 12, and has a landscape orientation in the second position (Figure 5-2) wherein it is approximately the same width as the first device member 12.

With continued reference to Figures 5-1 and 5-2, in some embodiments it is possible for one of the first face 26 (Figure 5-1) or the second face 30 (Figure 5-2) to not have any i/o element thereon. For example, in the embodiment shown in Figures 5-1 and 5-2, the first face 26 has no i/o element thereon and the second face 30 has an alphabetic keypad thereon, which would be a second i/o element 28. When the second device member 14 is in the second position (Figure 5-2) it can be used for text entry (eg. for sending emails). When the second device member 14 is in the first position such that it is in a portrait orientation, it can conveniently be used as a handle for holding the handheld electronic device 10 when watching video output, such as a movie, on the display provided as the first i/o element 22. Although not shown, a video control arrangement (eg. with fast-forward, rewind, play, pause and forwards and backwards skip features) could be provided on the first face 26 of the second device member 14 shown in Figure 5-1.

In another alternative embodiment, which is not shown, it is possible for the first device member 12 to have neither a portrait nor a landscape orientation. For example, the first device member 12 may be generally square.

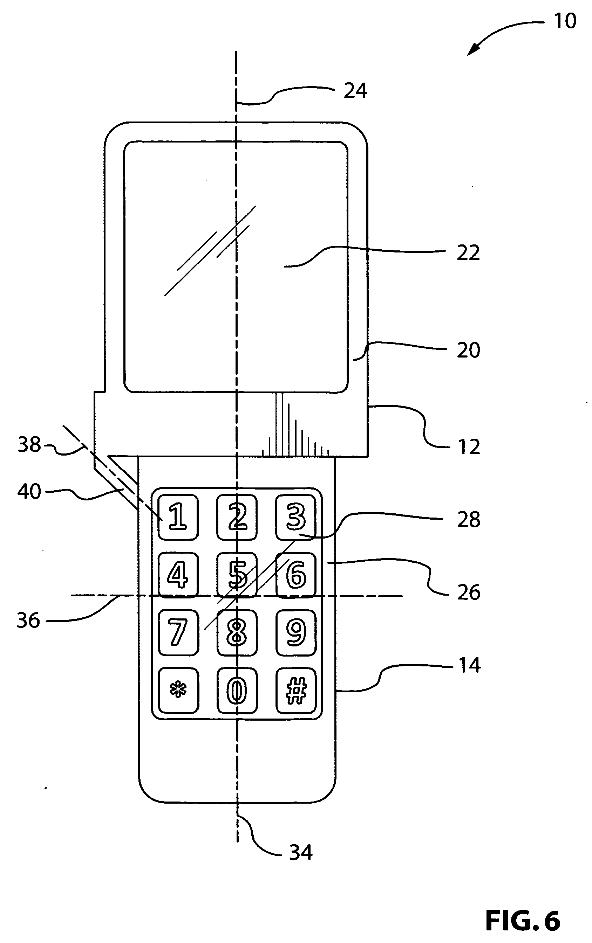

While it has been shown in Figures 1, 2, 3 and 4 for the axial dimension 43 (Figure 1-2) and the transverse dimension 41 (Figure 1-2) to differ, it is alternatively possible for them to be the same. An example of this is the generally square second device member shown at 14 in Figure 6. In the embodiment shown in Figure 6, the first face 26 of the second device member 14 may optionally have a second i/o element thereon, and the second face (not shown) of the second device member 14 may optionally have a third i/o element thereon. A second i/o element 28 is shown on the first face 26 in Figure 6.

In the embodiment shown in Figures 1, 2, 3 and 4, the position of the rotation axis 38 is selected so that the second device member 14 is centered about the first device member axis 24, in both the first and second positions. In embodiments wherein the axial and transverse dimensions 43 and 41 (Figure 1-2) of the second device member 14 differ from each other (eg. embodiments wherein the second device member 14 is generally rectangular), it will be noted that a portion of the second device member 14 may overlap with a portion of the first device member 12 when the second device member is in the first position.

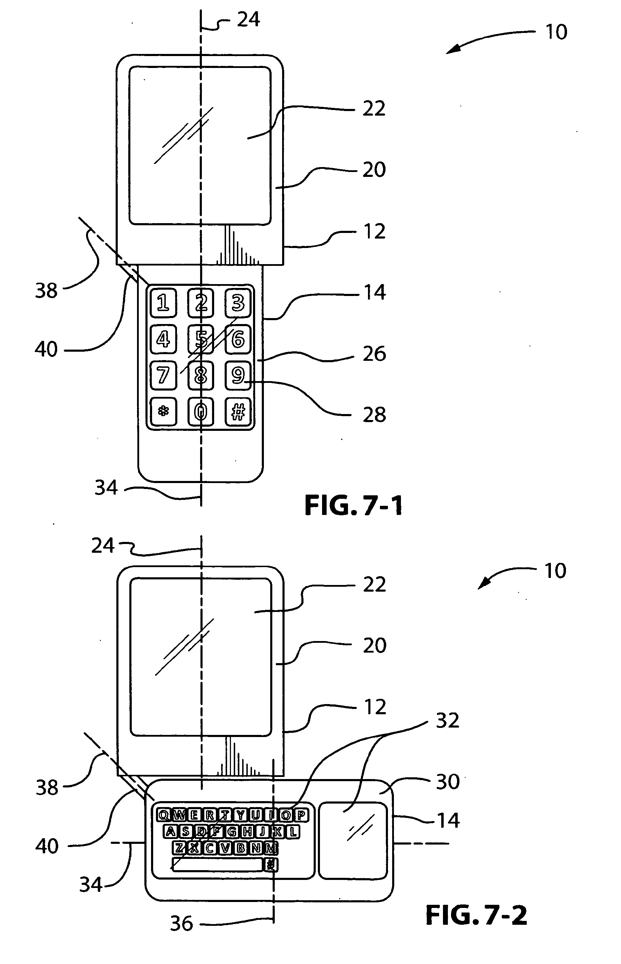

It is alternatively possible for the rotation axis 38 to be selected so that the second device member 14 is not centered about the first device member axis 24 in one or both of the first and second positions. For example, referring to Figures 7-1 and 7-2, the second device member 14 is centered about the first device member axis 24 in the first position (Figure 7-1), but is not centered about the first device member axis 24 in the second position (Figure 7-2).

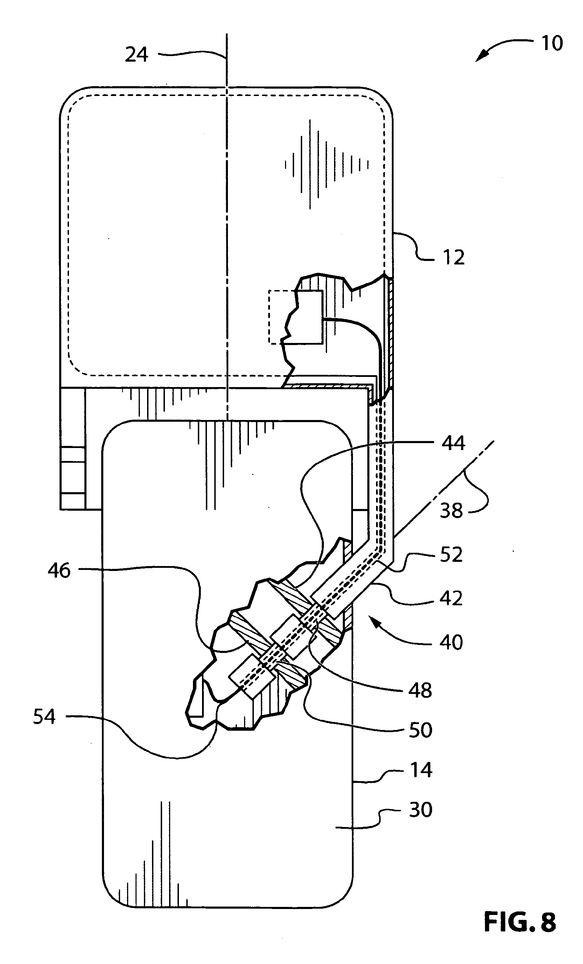

In the embodiments shown, a swivel, shown at 40, is provided between the first and second device members 12 and 14 for permitting the rotation of the second device member 14 about the rotation axis 38. Referring to Figure 8, the swivel 40 may include a shaft 42 that may be provided on the first device member 12, and at least first and second bearing members 44 and 46 that may be provided on the second device member 14. The bearing members 44 and 46 are received in circumferential channels 48 and 50 on the shaft 42, thereby preventing the second device member 14 from being pulled off the shaft 42, while permitting rotation of the second device member 14 about the shaft 42 and therefore about the rotation axis 38 which passes through the shaft 42.

The shaft 42 may be molded directly as part of the housing of the first device member 12.

The shaft 42 may be hollow, having a shaft passage 52 therethrough that extends between the interior of the first device member 12 and the interior of the second device member 14. One or more electrical conduits, shown at 54 may pass through the shaft passage 52 between components in the first device member 12 and components in the second device member 14. For example, one of the electrical conduits 54 may connect a battery in the first device member 12 to any i/o elements that are provided in the second device member 14. In another example, one or more of the electrical conduits 54 may connect a processor in the first device member 12 to any i/o elements that are provided in the second device member 14.

The electrical conduits 54 have sufficient length so as to permit the rotation of the second device member 14 between the first and second positions.

An advantage of using the swivel 40 to permit a user to select a portrait orientation or a landscape orientation for a portion of the handheld electronic device 10 is that the swivel 40 can be relatively thin, and may consequently have a relatively low impact on the thickness of the second device member 14.

Suitable limit surfaces (not shown) may be provided to limit the rotation of the second device member 14 to the range between the first and second positions (Figures 1 and 2 and Figures 3 and 4 respectively). These limit surfaces may be provided on the shaft 42 and in the interior of the second device member 14.

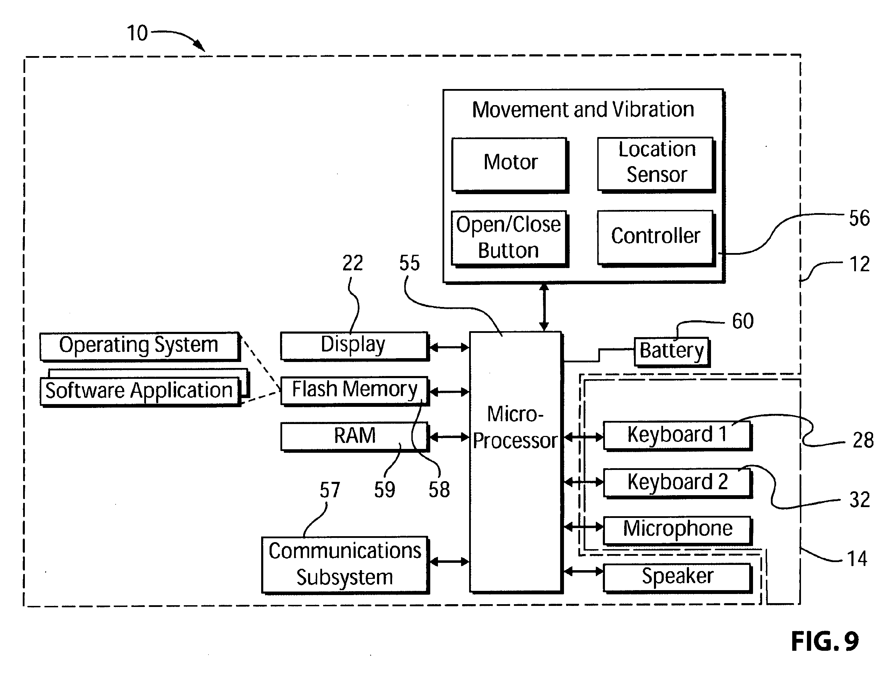

Referring to Figure 9, exemplary inner components of the handheld electronic device 10 are described. In embodiments wherein the handheld electronic device 10 is a smartphone, it may include a main processor 55, which communicates with the first, second and third i/o elements 22, 28 and 32, and also with other i/o elements that may be incorporated into the handheld electronic device 10, such as, a speaker and a microphone. The main processor 55 may also communicate with a plurality of other components, such as a movement and vibration subsystem 56, a communications subsystem 57, flash memory 58 for holding software applications and data, and RAM 59. The main processor 55 receives power from a battery 60. The main processor 55 and all the aforementioned components except for the second i/o element 28, the third i/o element 32 and a microphone may be housed in the first device member 12.

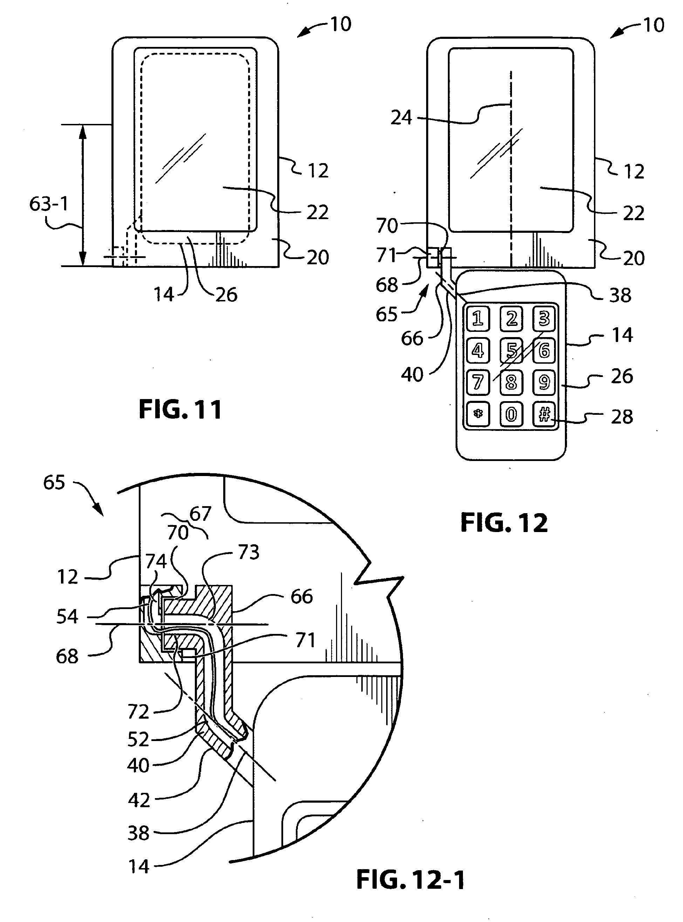

Referring to Figures 10, 10-1 and 11 embodiments may be provided wherein the handheld electronic device 10 can also move between an open position (Figure 10) and a closed position (Figure 11), in addition to permitting the second device member 14 to rotate between the first and second positions (the first position only is shown in Figures 10, 10-1 and 11). The closed position (Figure 11) may make the handheld electronic device 10 more compact than the open position, thereby making it easier to store (eg. in one's pocket or purse). The closed position may be used to indicate to the device 10 to disregard input from selected i/o elements, so as to inhibit the unintended sending of emails, messages and calls from the device 10 while it is stored (eg. in one's pocket or purse). The closed position may protect certain elements, (eg. the second i/o element 28 (Figures 10 and 11), in the embodiment shown in Figures 10, 10-1 and 11) from inadvertent damage.

Referring Figure 10-1, the handheld electronic device 10 has a slide mechanism 61 that permits movement between the open and closed positions. The slide mechanism 61 may have any suitable structure. For example, the slide mechanism 61 may include one or more sliders 63 on each side of a third device member 62, which run in a pair of slots 64 on the first device member 12, thereby slidably connecting the third device member 62 and the first device member 12. The swivel 40 rotatably connects the second device member 14 and the third device member 62. Thus, the second device member 14 is connected to the first device member 12 through the swivel 40, the third device member 62 and the slide mechanism 61. As a result, movement of the handheld electronic device 10 in Figures 10 and 11 between the open and closed positions slides the second device member 14 relative to the first device 12. In the closed position (Figure 11) the first and second device members 12 and 14 overlap one another by a first overlap length 63-1, which may physically prevent use of any i/o element on the first face 26 of the second device member 14. In the open position (Figure 10) the first and second device members 12 and 14 overlap one another by a second overlap length 63-2, which is less than the first overlap length 63-1 thereby permitting use of an i/o element (if provided) on the first face 26 of the second device member 14.

A biasing member (not shown) may be provided to bias the handheld electronic device 10 towards the open position. A latch (not shown) may be provided to hold the handheld electronic device 10 against the biasing member, in the closed position. Suitable limit surfaces (not shown) limit the movement of the first and third device members 12 and 62 to between the open and closed positions.

Aside from the shaft 42 being provided on the third device member 62, thereby permitting the aforementioned sliding movement between the first and second device members 12 and 14, the relationship between the first and second device members 12 and 14 may be similar to that shown and described above for the embodiment shown in Figures 1, 2, 3 and 4. The second device member 14 is rotatable about the rotation axis 38, relative to the first device member 12, between the first and second positions (the first position is shown in Figure 10). As shown in Figure 10-1, the electrical conduits 54 pass through the shaft passage 52 between the second and third device members 14 and 62. The electrical conduits 54 also pass between the third device member 62 and the first device member 12 using any suitable structure, (eg. ribbon cable - not shown).

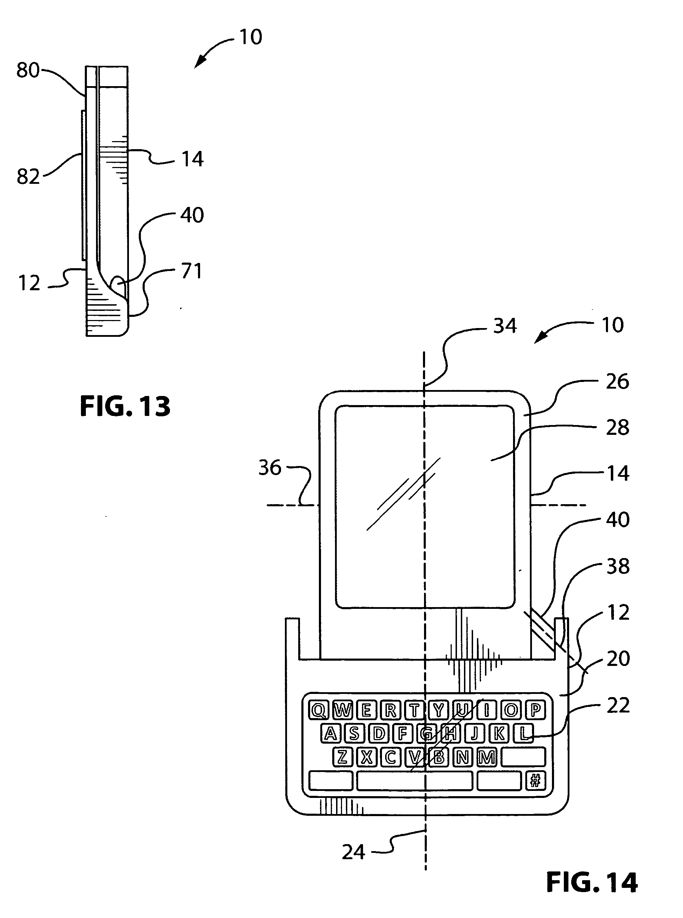

Reference is made to Figures 12, 12-1 and 13, which show another embodiment of the handheld electronic device 10 that is movable between an open position and a closed position. The embodiment shown in Figures 12 and 13, however, includes a hinge 65 instead of the slide mechanism 61 (Figure 10).

Referring to Figure 12, the hinge 65 may rotatably connect a third device member 66 and the first device member 12 for rotation about a second rotation axis 68 that may be generally perpendicular to the first device member axis 24. For the purposes of clarity with respect to describing the embodiment shown in Figures 12 and 13, the rotation axis 38 about which the second device member 14 rotates between the first and second positions, may be referred to as the first rotation axis 38.

The hinge 65 may be any suitable hinge, and may, for example include a stub shaft 70 on one side of the third device member 66, and a shaft support 71 on one side of the first device member 12.

The shaft 42 may be provided on the third device member 66 and may support the second device member 14 in a manner similar to the shaft 42 shown in Figures 1, 2, 3 and 4. The hinge 65 permits the first and third device members 12 and 66 (and therefore permits the first and second device members 12 and 14) to rotate between an open position (Figure 12) and a closed position (Figure 13). Suitable limit surfaces (not shown) limit the movement of the first and third device members 12 and 66 to between the open and closed positions.

Referring to Figure 12-1, the stub shaft 70 may have a stub shaft passage 72 that connects to a third device member passage 73 through the third device member 66, which in tum connects to the shaft passage 52. The shaft support 71 may have a shaft support passage 74 that communicates with the stub shaft passage 72, so as to permit the electrical conduits 54 to extend between the first and second device members 12 and 14 through the third device member 66.

Referring to Figure 13, the first device member 12 has a second face, shown at 80, on which there may be a fourth i/o element 82. The fourth i/o element may be any suitable i/o element, such as, for example, a display. By having the fourth i/o element, information and/or images can be displayed even when the handheld electronic device is in the closed position.

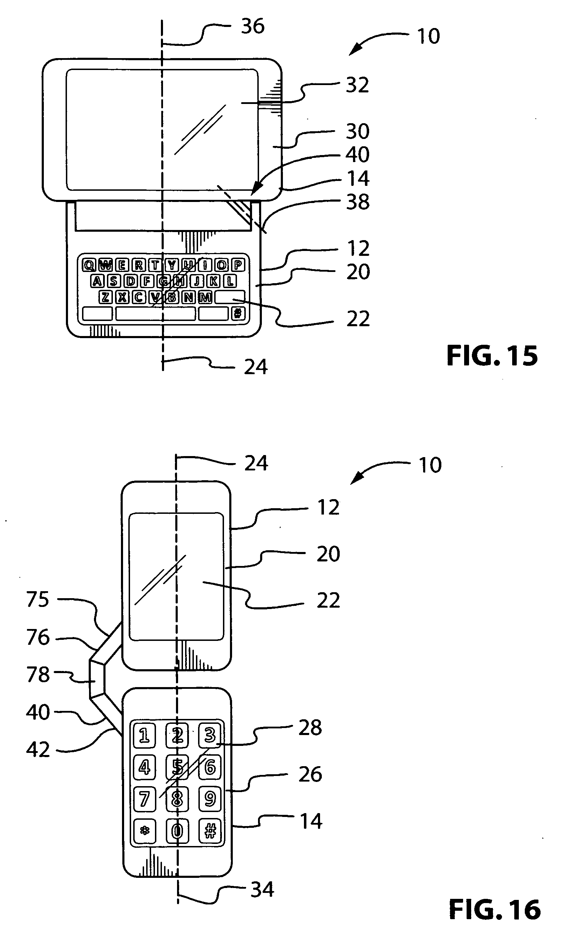

In the embodiments described and shown in Figures 1 through 13, the first device member 12 is shown to be the upper device member (which holds, for example, a display) and the second device member 12 is shown to be the lower device member (which holds, for example, a keypad or other input element on each of its faces 26 and 30). It is alternatively possible, however, for the first device member 12 to be the lower device member, and for the second device member 14 to be the upper device member, as shown in Figures 14 and 15. In this embodiment, the second or upper device member 14 rotates between a first position (Figure 14) and a second position (Figure 15). Each of the first and second faces 26 and 30 of the second device member 14 shown in Figures 14 and 15 may include, for example, a display. The display shown on the first face 26 may, for example, be ideally suited for text entry, while the display shown on the second face 30 may, for example, be ideally suited for displaying images or video.

As shown in Figure 16, another swivel 75 may be provided on the first device member 12. This would permit both the first and second device members 12 and 14 to be configurable into a landscape orientation or a portrait orientation. As a result, the handheld electronic device 10 may be configurable into four configurations, based on each of the first and second device members 12 and 14 being positionable in first and second positions.

The second swivel 75 may be very similar to the swivel 40 (which may be referred to as the first swivel 40) and may thus include a shaft 76 that is held by first and second bearing members (not shown) in the first device member 12. In the embodiment shown in Figure 16, a third device member 78 may be provided which holds the two shafts 42 and 76. Thus, the first and second device members 12 and 14 are connected to each other through the first and second swivels 40 and 75 and the third device member 78.

In the embodiment shown in Figures 1, 2, 3 and 4, the first and the second device members 12 and 14 are substantially coplanar. It is alternatively possible for the first and second device members 12 and 14 to have an angle therebetween that is less than 180 degrees, as is the case with many cellular telephones currently available.

It can be seen in the embodiments shown in the figures that the second device member 14 is connected to the first device member 12. For example, in the embodiment shown in Figures 1, 2, 3 and 4, the second device member 14 is connected to the first device member 12 via a connector comprising the swivel 40. In the embodiment shown in Figures 10-11, the second device member 14 is connected to the first device member 12 via a connector comprising the swivel 40, the third device member 62, and the slide mechanism 61. In the embodiment shown in Figures 12-13, the second device member 14 is connected to the first device member 12 via a connector comprising the swivel 40, the third device member 66, and the hinge 65. In the embodiment shown in Figure 16, the second device member 14 is connected to the first device member via a connector comprising the first and second swivels 40 and 75 and the third device member 78.

While the above description constitutes a plurality of embodiments of the technology, it will be appreciated that the technology is susceptible to further modification and change without departing from the fair meaning of the accompanying claims.

## Claims

1. A handheld electronic device (10), comprising:
a first device member (12);
a second device member (14); and
a connector (40,61,62,65,66,75,78) connecting the first and second device members to gether,
wherein the first and second device members together have a first side (16) and a second side (18) that is opposite to the first side (16),
wherein a first face (26) of the second device member is square or rectangular in shape, and a second face (30) of the second device member that is opposite to the first face (26) is square or rectangular in shape,
wherein a first face axis (34) is along an axial dimension (43) of the first face (26) and a second face axis (36) that is perpendicular to the first face axis (34) is along a transverse dimension (41) of the second face (30),
wherein the second device member is rotatable between a first position and a second position about a rotation axis (38) that is parallel to the first and second faces of the second device member and that is at a first rotation axis angle (39-1) relative to the first face axis and at a second rotation axis angle (39-2) relative to the second face axis, and
wherein in the first position the first face of the second device member is on the first side, and in the second position the second face of the second device member is on the first side, and
wherein in the first position and in the second position of the second device member, at least a portion of the second device member extends beyond the first device member.

2. A handheld electronic device as claimed in claim 1, wherein a first face (20) of the first device member has a first input and/or output 'i/o' element (22) thereon, and wherein the first face of the second device member has a second i/o element (28) thereon and the second face of the second device member has a third i/o element (32) thereon.

3. A handheld electronic device as claimed in claim 2, wherein in the first position the first face of the second device member has a portrait orientation in use, and wherein in the second position the second face of the second device member has a landscape orientation in use.

4. A handheld electronic device as claimed in claim 3, wherein the first face of the first device member has a portrait orientation in use.

5. A handheld electronic device as claimed in claim 3, wherein the first face of the first device member has a landscape orientation in use.

6. A handheld electronic device as claimed in claim 3, wherein the first i/o element has a display, the second i/o element has a telephone keypad and the third i/o element has an alphabetic keypad.

7. A handheld electronic device as claimed in claim 1, wherein the first and second rotation axis angles are both 45 degrees.

8. A handheld electronic device as claimed in claim 3, wherein the first device member has a first device member axis (24), wherein the first and second rotation axis angles are both 45 degrees, and wherein the position of the rotation axis is selected such that the second device member is centered about the first device member axis in both the first and second positions.

9. A handheld electronic device as claimed in claim 3, wherein the connector comprises a swivel (40) extending along the rotation axis.

10. A handheld electronic device as claimed in claim 1, wherein the first device member is slidable relative to the second device member between a closed position wherein the first device member and second device member overlap one another by a first overlap length (63-1) and an open position wherein the first device member and second device member overlap one another by a second overlap length (63-2) which is less than the first overlap length thereby revealing an input element.

11. A handheld electronic device as claimed in claim 10, wherein the connector comprises:
a third device member (62);
a slide mechanism (61) connecting the first and third device members together; and
a swivel (40) extending along the rotation axis and connecting the second and third device members together.

12. A handheld electronic device as claimed in claim 1, wherein the first device member has a first device member axis (24), wherein the rotation axis is a first rotation axis (38), and wherein the first device member is rotatable about a second rotation axis (68) that is perpendicular to the first device member axis between a closed position wherein the first and second device members engage and face each other and an open position wherein the first and second device members extend away from each other thereby revealing an input element.

13. A handheld electronic device as claimed in claim 12, wherein the connector comprises:
a third device member (66);
a hinge (65) extending along the second rotation axis and connecting the first and third device members together; and
a swivel (40) extending along the first rotation axis and connecting the second and third device members together.

14. A handheld electronic device as claimed in claim 12, wherein a first face (20) of the first device member has a first i/o element (22) thereon, and wherein the first face of the second device member has a second i/o element (28) thereon and the second face of the second device member has a third i/o element (32) thereon, and wherein a second face (80) of the first device member has a fourth i/o element (82) thereon.

15. A handheld electronic device as claimed in claim 14, wherein the fourth i/o element is a display.

## Patentansprüche

1. Handgehaltene elektronische Vorrichtung (10), die aufweist:
ein erstes Vorrichtungselement (12);
ein zweites Vorrichtungselement (14); und
einen Verbinder (40, 61, 62, 65, 66, 75, 78), der die ersten und zweiten Vorrichtungselemente miteinander verbindet,
wobei die ersten und zweiten Vorrichtungselemente zusammen eine erste Seite (16) und eine zweite Seite (18) haben, die der ersten Seite (16) gegenüberliegt,
wobei eine erste Fläche (26) des zweiten Vorrichtungselements eine quadratische oder rechteckige Form hat, und eine zweite Fläche (30) des zweiten Vorrichtungselements, die der ersten Fläche (26) gegenüberliegt,
eine quadratische oder rechteckige Form hat,
wobei eine erste Flächenachse (34) entlang einer axialen Dimension (43) der ersten Fläche (26) ist und eine zweite Flächenachse (36), die senkrecht zu der ersten Flächenachse (34) ist, entlang einer transversalen Dimension (41) der zweiten Fläche (30) ist,
wobei das zweite Vorrichtungselement zwischen einer ersten Position und
einer zweiten Position um eine Rotationsachse (38) drehbar ist, die zu den ersten und zweiten Flächen des zweiten Vorrichtungselements parallel ist und die in einem ersten Rotationsachsenwinkel (39-1) relativ zu der ersten Flächenachse ist und in einem zweiten Rotationsachsenwinkel (39-2) relativ zu der zweiten Flächenachse ist, und
wobei in der ersten Position die erste Fläche des zweiten Vorrichtungselements auf der ersten Seite ist, und in der zweiten Position die zweite Fläche des zweiten Vorrichtungselements auf der ersten Seite ist, und
wobei sich in der ersten Position und in der zweiten Position des zweiten Vorrichtungselements zumindest ein Teil des zweiten Vorrichtungselements über das erste Vorrichtungselement hinaus erstreckt.

2. Handgehaltene elektronische Vorrichtung gemäß Anspruch 1, wobei eine erste Fläche (20) des ersten Vorrichtungselements ein erstes Eingabe- und/oder Ausgabe-"I/O (Input/Output)"-Element (22) darauf hat und wobei die erste Fläche des zweiten Vorrichtungselements ein zweites I/O-Element (28) darauf hat und die zweite Fläche des zweiten Vorrichtungselements ein drittes I/O-Element (32) darauf hat.

3. Handgehaltene elektronische Vorrichtung gemäß Anspruch 2, wobei in der ersten Position die erste Fläche des zweiten Vorrichtungselements bei Benutzung ein Hochformat hat und wobei in der zweiten Position die zweite Fläche des zweiten Vorrichtungselements bei Benutzung ein Querformat hat.

4. Handgehaltene elektronische Vorrichtung gemäß Anspruch 3, wobei die erste Fläche des ersten Vorrichtungselements bei Benutzung ein Hochformat hat.

5. Handgehaltene elektronische Vorrichtung gemäß Anspruch 3, wobei die erste Fläche des ersten Vorrichtungselements bei Benutzung ein Querformat hat.

6. Handgehaltene elektronische Vorrichtung gemäß Anspruch 3, wobei das erste I/O-Element eine Anzeige hat, das zweite I/O-Element eine Telefon-Tastatur hat und das dritte I/O-Element eine alphabetische Tastatur hat.

7. Handgehaltene elektronische Vorrichtung gemäß Anspruch 1, wobei die ersten und zweiten Rotationsachsenwinkel beide 45 Grad sind.

8. Handgehaltene elektronische Vorrichtung gemäß Anspruch 3, wobei das erste Vorrichtungselement eine erste Vorrichtungselementachse (24) hat, wobei die ersten und zweiten Rotationsachsenwinkel beide 45 Grad sind, und wobei die Position der Rotationsachse derart ausgewählt ist, dass das zweite Vorrichtungselement um die erste Vorrichtungselementachse zentriert ist in sowohl der ersten als auch der zweiten Position.

9. Handgehaltene elektronische Vorrichtung gemäß Anspruch 3, wobei der Verbinder ein Drehgelenk (40) aufweist, das sich entlang der Rotationsachse erstreckt.

10. Handgehaltene elektronische Vorrichtung gemäß Anspruch 1, wobei das erste Vorrichtungselement relativ zu dem zweiten Vorrichtungselement zwischen einer geschlossenen Position, in der sich das erste Vorrichtungselement und das zweite Vorrichtungselement um eine erste Überlappungslänge (63-1) überlappen, und einer offenen Position verschiebbar ist, in der sich das erste Vorrichtungselement und das zweite Vorrichtungselement um eine zweite Überlappungslänge (63-2) überlappen, die geringer ist als die erste Überlappungslänge, wodurch ein Eingabeelement freigegeben wird.

11. Handgehaltene elektronische Vorrichtung gemäß Anspruch 10, wobei der Verbinder aufweist:
ein drittes Vorrichtungselement (62);
einen Gleitmechanismus (61), der die ersten und dritten Vorrichtungselemente miteinander verbindet; und
ein Drehgelenk (40), das sich entlang der Rotationsachse erstreckt und die zweiten und dritten Vorrichtungselemente miteinander verbindet.

12. Handgehaltene elektronische Vorrichtung gemäß Anspruch 1, wobei das erste Vorrichtungselement eine erste Vorrichtungselementachse (24) hat, wobei die Rotationsachse eine erste Rotationsachse (38) ist, und wobei das erste Vorrichtungselement um eine zweite Rotationsachse (68) drehbar ist, die senkrecht ist zu der ersten Vorrichtungselementachse, zwischen einer geschlossenen Position, in der die ersten und zweiten Vorrichtungselemente in Eingriff sind und einander gegenüberliegen, und einer offenen Position, in der sich die ersten und zweiten Vorrichtungselemente voneinander weg erstrecken, wodurch ein Eingabeelement freigegeben wird.

13. Handgehaltene elektronische Vorrichtung gemäß Anspruch 12, wobei der Verbinder aufweist:
ein drittes Vorrichtungselement (66);
ein Scharnier (65), das sich entlang der zweiten Rotationsachse erstreckt und die ersten und dritten Vorrichtungselemente miteinander verbindet; und
ein Drehgelenk (40), das sich entlang der ersten Rotationsachse erstreckt und die zweiten und dritten Vorrichtungselemente miteinander verbindet.

14. Handgehaltene elektronische Vorrichtung gemäß Anspruch 12, wobei eine erste Fläche (20) des ersten Vorrichtungselements ein erstes I/O-Element (22) darauf hat, und wobei die erste Fläche des zweiten Vorrichtungselements ein zweites I/O-Element (28) darauf hat und die zweite Fläche des zweiten Vorrichtungselements ein drittes I/O-Element (32) darauf hat, und wobei eine zweite Fläche (80) des ersten Vorrichtungselements ein viertes I/O-Element (82) darauf hat.

15. Handgehaltene elektronische Vorrichtung gemäß Anspruch 14, wobei das vierte I/O-Element eine Anzeige ist.

## Revendications

1. Dispositif électronique portable (10), comprenant :
un premier élément de dispositif (12) ;
un deuxième élément de dispositif (14) ; et
un connecteur (40, 61, 62, 65, 66, 75, 78) connectant les premier et deuxième éléments de dispositif l'un à l'autre,
dans lequel les premier et deuxième éléments de dispositifs comportent ensemble un premier côté (16) et un deuxième côté (18) qui est opposé au premier côté (16),
dans lequel une première face (26) du deuxième élément de dispositif est de forme carrée ou rectangulaire, et une deuxième face (30) du deuxième élément de dispositif qui est opposée à la première face (26) est de forme carrée ou rectangulaire,
dans lequel un axe de première face (34) se trouve le long d'une dimension axiale (43) de la première face (26) et un axe de deuxième face (36) qui est perpendiculaire à l'axe de première face (34) se trouve le long d'une dimension transversale (41) de la deuxième face (30),
dans lequel le deuxième élément de dispositif peut tourner entre une première position et une deuxième position autour d'un axe de rotation (38) qui est parallèle aux première et deuxième faces du deuxième élément de dispositif et qui se trouve à un premier angle d'axe de rotation (39-1) par rapport à l'axe de première face et à un deuxième angle d'axe de rotation (39-2) par rapport à l'axe de deuxième face, et
dans lequel, dans la première position, la première face du deuxième élément de dispositif se trouve sur le premier côté, et, dans la deuxième position, la deuxième face du deuxième élément de dispositif se trouve sur le premier côté, et
dans lequel, dans la première position et dans la deuxième position du deuxième élément de dispositif, au moins une partie du deuxième élément de dispositif s'étend au-delà du premier élément de dispositif.

2. Dispositif électronique portable selon la revendication 1, dans lequel une première face (20) du premier élément de dispositif comporte sur celle-ci un premier élément d'entrée et/ou de sortie, ou "d'entrée/sortie", (22), et dans lequel la première face du deuxième élément de dispositif comporte sur celle-ci un deuxième élément d'entrée/sortie (28) et la deuxième face du deuxième élément de dispositif comporte sur celle-ci un troisième élément d'entrée/sortie (32).

3. Dispositif électronique portable selon la revendication 2, dans lequel, dans la première position, la première face du deuxième élément de dispositif a une orientation de portrait lors de l'utilisation, et dans lequel, dans la deuxième position, la deuxième face du deuxième élément de dispositif a une orientation de paysage lors de l'utilisation.

4. Dispositif électronique portable selon la revendication 3, dans lequel la première face du premier élément de dispositif a une orientation de portrait lors de l'utilisation.

5. Dispositif électronique portable selon la revendication 3, dans lequel la première face du premier élément de dispositif a une orientation de paysage lors de l'utilisation.

6. Dispositif électronique portable selon la revendication 3, dans lequel le premier élément d'entrée/sortie comporte un dispositif d'affichage, le deuxième élément d'entrée/sortie comporte un clavier de téléphone et le troisième élément d'entrée/sortie comporte un clavier alphabétique.

7. Dispositif électronique portable selon la revendication 1, dans lequel les premier et deuxième angles d'axe de rotation sont tous deux de 45 degrés.

8. Dispositif électronique portable selon la revendication 3, dans lequel le premier élément de dispositif comporte un axe de premier élément de dispositif (24), dans lequel les premier et deuxième angles d'axe de rotation sont tous deux de 45 degrés, et dans lequel la position de l'axe de rotation est sélectionnée de telle sorte que le deuxième élément de dispositif soit centré autour de l'axe de premier élément de dispositif à la fois dans les première et deuxième positions.

9. Dispositif électronique portable selon la revendication 3, dans lequel le connecteur comprend une rotule (40) s'étendant le long de l'axe de rotation.

10. Dispositif électronique portable selon la revendication 1, dans lequel le premier élément de dispositif peut coulisser par rapport au deuxième élément de dispositif entre une position fermée dans laquelle le premier élément de dispositif et le deuxième élément de dispositif se chevauchent mutuellement d'une première longueur de chevauchement (63-1), et une position ouverte dans laquelle le premier élément de dispositif et le deuxième élément de dispositif se chevauchent mutuellement d'une deuxième longueur de chevauchement (63-2) qui est inférieure à la première longueur de chevauchement, de façon à révéler ainsi un élément d'entrée.

11. Dispositif électronique portable selon la revendication 10, dans lequel le connecteur comprend :
un troisième élément de dispositif (62) ;
un mécanisme de coulissement (61) reliant les premier et troisième éléments de dispositif l'un à l'autre ; et
une rotule (40) s'étendant le long de l'axe de rotation et reliant les deuxième et troisième éléments de dispositif l'un à l'autre.

12. Dispositif électronique portable selon la revendication 1, dans lequel le premier élément de dispositif comporte un axe de premier élément de dispositif (24), dans lequel l' axe de rotation est un premier axe de rotation (38), et dans lequel le premier élément de dispositif peut tourner autour d'un deuxième axe de rotation (68) qui est perpendiculaire à l'axe de premier élément de dispositif entre une position fermée dans laquelle les premier et deuxième éléments de dispositif viennent mutuellement prise et se font mutuellement face, et une position ouverte dans laquelle les premier et deuxième éléments de dispositif s'éloignent l'un de l'autre, de façon à révéler ainsi un élément d'entrée.

13. Dispositif électronique portable selon la revendication 12, dans lequel le connecteur comprend :
un troisième élément de dispositif (66) ;
une charnière (65) s'étendant le long du deuxième axe de rotation et reliant les premier et troisième éléments de dispositif l'un à l'autre ; et
une rotule (40) s'étendant le long du premier axe de rotation et reliant les deuxième et troisième éléments de dispositif l'un à l'autre.

14. Dispositif électronique portable selon la revendication 12, dans lequel une première face (20) du premier élément de dispositif comporte sur celle-ci un premier élément d'entrée/sortie (22), et dans lequel la première face du deuxième élément de dispositif comporte sur celle-ci un deuxième élément d'entrée/sortie (28) et la deuxième face du deuxième élément de dispositif comporte sur celle-ci un troisième élément d'entrée/sortie (32), et dans lequel une deuxième face (80) du premier élément de dispositif comporte sur celle-ci un quatrième élément d'entrée/sortie (82).

15. Dispositif électronique portable selon la revendication 14, dans lequel le quatrième élément d'entrée/sortie est un dispositif d'affichage.
